# EUROPÄISCHE PATENTANMELDUNG

(11) **EP 3 035 136 A1**
(43) Veröffentlichungstag der Anmeldung: **22.06.2016**
(21) Anmeldenummer: 14198930.1
(22) Anmeldetag: 18.12.2014
(51) Int. Cl.: G05B 11/36, G05B 13/02, G05B 11/42

(54) **Verfahren und Computerprogramm zur Parametrierung eines Reglers mit mehreren Stellwertausgängen**

(71) Anmelder: Siemens Aktiengesellschaft, 80333 München (DE)
(72) Erfinder: Jahn, Uwe, 09126 Chemnitz (DE); Mantel, Martin, 91452 Wilhermsdorf (DE); Martin, Christian, 91054 Erlangen (DE); Müller, Georg, 09669 Frankenberg (DE); Vogel, Thomas, 09217 Burgstädt (DE)

(57) **Zusammenfassung**

Die Erfindung betrifft ein Verfahren und ein Computerprogramm zur Ermittlung von Parameterwerten (CtrlParams) für einen PID-Regler mit zumindest zwei auf dieselbe Regelgröße wirkenden Stellwertausgängen (PID_Temp_1.OutputHeat, PID_Temp_1.OutputCool), wobei in einem Arbeitspunkt des Reglers zur Ermittlung der Parameterwerte (CtrlParams) für die Regelung eines ersten der Stellwertausgänge (PID_Temp_1.OutputCool) mittels Schwingungsversuch dieser erste Stellwertausgang (PID_Temp_1.OutputCool) zu einer Oszillation angeregt wird, und wobei aus den Eigenschaften der Oszillation der Reaktion des Istwertes die Parameter (CtrlParams) für die Regelung des ersten Stellwertausganges (PID_Temp_1.OutputCool) ermittelt werden. Dabei wird für die Dauer der Ermittlung für einen der Stellwertausgänge, bevorzugt für den zweiten Stellwertausgang (PID_Temp_1.OutputHeat), ein konstanter, von Null verschiedener Offset als Stellwert vorgegeben.

## Beschreibung

Die Erfindung betrifft ein Verfahren zur Ermittlung von Parameterwerten für einen PID-Regler mit zumindest zwei auf dieselbe Regelgröße wirkenden Stellwertausgängen gemäß dem Oberbegriff des Patentanspruchs 1, und ein Computerprogramm zur Regelung von zumindest zwei auf dieselbe Regelgröße wirkenden Stellwertausgängen mittels eines PID-Algorithmus gemäß dem Oberbegriff des Patentanspruchs 11.

Für die Ermittlung oder Optimierung von Parametern (Regel- oder Reglerparametern), insbesondere für PID-Regler, ist eine Vielzahl unterschiedlicher Verfahren bekannt. PID-Regler in industriellen Automatisierungssystemen, die regelmäßig durch Software für industrielle Steuerungen definiert sind, haben solche Parametrierungs- oder Optimierungsverfahren oft integriert und werden in diesem Fall auch als "Kompaktregler" bezeichnet.

Optimierungsverfahren für Kompaktregler werden auf unterschiedlichste Weise umgesetzt. Die meisten dieser Verfahren basieren im Kern jedoch auf einem der folgenden beiden Prinzipien.

Zum einen ist die sog. "Sprungwertmethode", auch als "Sprungantwort-Verfahren" bezeichnet, bekannt, mit Ausgabe eines Stellwertsprungs auf die Regelstrecke und Auswertung der Streckenreaktion. Aus den Daten dieser Sprungantwort werden geeignete Regelparameter berechnet, z.B. durch das sog. "Wendetangentenverfahren". Diese Methode eignet sich sehr gut für Regelstrecken mit Tot-Zeit und einer dominierenden Zeitkonstante. Bei Prozessen mit mehreren unterschiedlichen Zeitkonstanten führt diese Methode nicht unbedingt zu geeigneten Ergebnissen.

Zum anderen wird im Stand der Technik oft die "Relay-Feedback-Methode" verwendet, die in einer optimierten Form in der Druckschrift EP 2187276 B1 - Jahn et al. "Verfahren zur Ermittlung von Parameterwerten zum Regeln eines Zustandes eines Systems" beschrieben ist. Dabei wird ausgehend von einem Arbeitspunkt durch Zweipunkt-Regelung eine begrenzte Istwert-Schwingung erzeugt. Aus den Daten der Schwingung werden geeignete Regelparameter berechnet. Dieses Verfahren liefert für ein breiteres Spektrum an Prozessen geeignete Regelparameter als das beschriebene Verfahren "Sprungwertmethode" und erzielt dabei auch meist ein besseres Regelverhalten.

Besonders verbreitet sind diese Optimierungsverfahren bei PID-Reglern mit nur einem Stellwertausgang, der nur in eine Richtung wirken kann, z.B. ein Regler bei einer Temperaturregelung mit nur einem Ausgang, der nur heizt oder nur kühlt.

Zudem gibt es auch PID-Regler mit zwei Stellwertausgängen, die entgegengesetzt wirken, z.B. bei einer Temperaturregelung ein Regler mit einem Ausgang, der heizt, und einem weiteren Ausgang, der kühlt. Das Verfahren "Sprungwertmethode" ist auch bei diesem Reglertyp anwendbar.

Für das bevorzugte Verfahren "Relay-Feedback-Methode" ergibt sich bei einem PID-Reglern mit zwei Stellwertausgängen das Problem, dass der Ausgang, für den die Optimierung durchgeführt werden soll, aktiv sein muss, da er dazu mit einer periodischen Stellwertänderung eine Schwingung des Istwerts verursachen muss.

Diese Voraussetzung ist jedoch oft nicht erfüllt, wie am Beispiel eines PID-Reglers mit einem Ausgang für Heizen und einem Ausgang für Kühlen zur Regelung eines Temperaturprozesses ersichtlich ist. Dabei ist im Systemzustand "Heizbetrieb" die Kühlung üblicherweise abgeschaltet (Stellwert: 0). Die Optimierung für den Stellwertausgang zum Heizen mittels des Verfahrens "Relay-Feedback-Methode" ist an diesem Arbeitspunkt (Sollwert) ohne Probleme möglich. Die Optimierung für den Stellwertausgang zum Kühlen mittels des Verfahrens "Relay-Feedback-Methode" ist an diesem Arbeitspunkt (Sollwert) nicht möglich, denn der Stellwertausgang zum Kühlen ist am Arbeitspunkt nicht aktiv.

Die oben genannten wesentlichen Vorteile des Verfahrens "Relay-Feedback-Methode", nämlich die Eignung für ein breiteres Spektrum an Regelstrecken und ein besseres Regelverhalten, gehen bei einer Beschränkung auf Verfahren wie "Sprungwertmethode" jedoch verloren.

Es ist also eine Aufgabe der vorliegenden Erfindung, die Parametrierung von Reglern mit mehreren gegensätzlich auf eine Regelgröße wirkenden Stellwertausgängen zu verbessern, insbesondere die "Relay-Feedback-Methode" für solche Regler nutzbar zu machen.

Zwar ist es möglich, den Stellwertausgang zum Heizen für die Optimierung des Stellwertausgangs zum Kühlen zu deaktivieren, jedoch würde der Istwert dann stetig fallen, bis er die Umgebungstemperatur erreicht hat. Die Erzeugung einer Istwert-Schwingung (Oszillation) im Arbeitspunkt mit Änderungen des Kühlstellwerts ist auf diese Weise nicht möglich.

Zur Abhilfe wäre es zwar möglich, den Stellwertausgang zum Heizen für die Optimierung des Stellwertausgangs zum Kühlen weiterhin geregelt zu betreiben (Berechnung des Heizstellwertes durch den PID-Algorithmus), somit wäre die Erzeugung einer Schwingung mit dem Stellwertausgang für Kühlen zwar prinzipiell möglich. Das Ergebnis der Optimierung wäre jedoch verfälscht und unbrauchbar, da der Regler mit dem Stellwertausgang für Heizen gegen die Istwertschwingung regeln würde und diese damit verfälschen würde.

Es ist eine Kernidee der Lösung der Aufgabe, durch ein Verfahren oder einen Software-Reglerbaustein die Optimierung nach Verfahren "Relay-Feedback-Methode" für einen ersten Stellwertausgang, der am Arbeitspunkt, an dem die Optimierung durchgeführt werden soll, nicht aktiv ist, zu ermöglichen, indem an einem der Stellwertausgänge, bevorzugt am entgegengesetzt wirkenden zweiten Stellwertausgang, ein konstanter Offset für die Dauer der Optimierung vorgegeben werden kann. Wird dieser Offset größer gewählt, als der Stellwert im stationären Zustand, so muss im Regelbetrieb der erste Stellwertausgang aktiv werden, damit der Istwert am Sollwert verbleibt, d.h., dass die Regelgröße am Arbeitspunkt gehalten wird.

Ein Optimierungsoffset kann also erfindungsgemäß am Stellwertausgang, dessen Reglerparameter nicht optimiert werden, oder am Stellwertausgang, dessen Reglerparameter optimiert werden sollen, oder an beiden Stellwertausgängen gleichzeitig vorgegeben werden. Die Offsets werden dabei auf den Wert, der sich aus dem vom PID-Algorithmus berechneten Stellwert für diesen Stellwertausgang ergibt, addiert. Der PID-Algorithmus des Reglers passt nach der Offsetvorgabe den Stellwert so an, dass der Istwert am Arbeitspunkt (Sollwert) verbleibt. Mit Start der Optimierung wird der Stellwertausgang, für den die Optimierung der Reglerparameter durchgeführt wird, periodisch verändert, während der Stellwertausgang, dessen zugeordnete Reglerparameter nicht optimiert werden, konstant gehalten wird. Unabhängig davon, an welchem Teil-Regler der Offset vorgegeben wird, ist das Prinzip immer, den Stellwertausgang, für den die Reglerparameter ermittelt oder optimiert werden sollen, in einen aktiven Zustand zu führen.

Die Aufgabe wird insbesondere durch ein Verfahren gemäß Patentanspruch 1, eine Steuerung mit einem Software-Reglerbaustein zur Durchführung des Verfahrens und insbesondere ein Computerprogramm gemäß Patentanspruch 11 gelöst.

Dabei wird ein Verfahren zur Ermittlung von Parameterwerten für einen PID-Regler mit zumindest zwei auf dieselbe Regelgröße wirkenden Stellwertausgängen vorgeschlagen, wobei in einem Arbeitspunkt des Reglers zur Ermittlung der Parameterwerte für die Regelung eines ersten der Stellwertausgänge mittels Schwingungsversuch dieser erste Stellwertausgang zu einer Oszillation angeregt wird, und wobei aus den Eigenschaften der Oszillation und der Reaktion des Istwertes die Parameter für die Regelung des ersten Stellwertausganges ermittelt werden. Dabei wird für die Dauer der Ermittlung für einen der Stellwertausgänge ein konstanter, von Null verschiedener Offset als Stellwert vorgegeben bzw. diesem addiert. Dadurch können für die Dauer der Parametrierung bzw. der Optimierung der Reglerparameter Bedingungen erreicht werden, die dem Anwender die Durchführung einer Optimierung nach dem Verfahren "Relay-Feedback-Methode" für nicht aktive Stellwertausgänge ermöglicht und die die Optimierung dabei nicht relevant verfälschen, d.h., dass die resultierenden Reglerparameter zu einer Verbesserung des Regelverhaltens führen. Der Vorteil für den Anwender liegt insbesondere darin, dass mit der genannten Lösung die Durchführung einer Optimierung nach dem Verfahren "Relay-Feedback-Methode" für beide Stellwertausgänge eines PID-Reglers mit zwei entgegengesetzt wirkenden Stellwertausgängen möglich ist, da dieses Verfahren im Allgemeinen Parameter für ein besseres Regelverhalten ermöglicht, als bekannte Verfahren.

Die Lösung der Aufgabe sieht weiterhin ein Computerprogramm zur Regelung von zumindest zwei auf dieselbe Regelgröße wirkenden Stellwertausgängen mittels eines PID-Algorithmus, wobei das Computerprogramm bei seiner Ausführung mittels eines mikroprozessorgesteuerten Systems, insbesondere einer industriellen Automatisierungskomponente, zur Ermittlung von Parameterwerten für den PID-Regler gemäß einem der vorstehend beschriebenen Verfahren eingerichtet ist. Damit lassen sich die anhand des Verfahrens diskutierten Vorteile realisieren.

Vorteilhafte Ausgestaltungen des erfindungsgemäßen Verfahrens sind in den abhängigen Patentansprüchen angegeben. Die dabei angegebenen Merkmale und Vorteile gelten sinngemäß auch für seinen erfindungsgemäßen Software-Reglerbaustein, Regler, Steuerung oder dergleichen. Die vorteilhaften Merkmale können sowohl einzeln, als auch beliebig miteinander kombiniert eingesetzt werden.

In einer vorteilhaften Ausgestaltung wird für die Dauer der Ermittlung für den zweiten Stellwertausgang ein konstanter, von Null verschiedener Offset als Stellwert vorgegeben. Dadurch ist es leichter möglich, diesen zweiten Stellwertausgang temporär konstant zu halten, so dass nur der Stellwertausgang des zu parametrierenden bzw. optimierenden Teil-Reglers oszilliert. Vorteilhaft wird dabei nach der Vorgabe des Offsets am zweiten Stellwertausgang vor dem Start der Optimierung bzw. Parametrierung der Stellwert am ersten Stellwertausgang durch den Regler im Regelbetrieb angepasst. Dadurch kann der Istwert am Arbeitspunkt (Sollwert) gehalten werden.

Das Verfahren ist besonders vorteilhaft für Regler anwendbar, bei denen beide Stellwertausgänge gegensätzlich auf dieselbe Regelgröße oder auf zwei miteinander gekoppelte Regelgrößen einwirken; sinngemäß ist das Verfahren zudem vorteilhaft auf Systeme mit mehr als zwei Regelgrößen anwendbar, wobei dann alle im jeweiligen Verfahrensdurchlauf nicht zu parametrierenden oder zu optimierenden Teil-Regler bzw. deren Stellgrößen ("Ausgänge") mit einem erfindungsgemäßen Offset versehen werden.

Vorteilhaft wird der vorgegebene Offset größer gewählt, als der sich in einem Regelbetrieb am gewählten Arbeitspunkt ergebende Stellwert des zweiten Stellwertausgangs. Somit wird der zu parametrierende bzw. zu optimierende Teil-Regler während der Analyse der Oszillation im Arbeitspunkt betrieben.

Die Oszillation wird vorteilhaft durch periodische Änderungen des Stellwertes des ersten Stellwertausganges angeregt.

Nach der Ermittlung der Regelparameter wird zur Wiederaufnahme des Regelbetriebs der konstante, von Null verschiedene Offset zurückgesetzt und der Regler in den Regelbetrieb mit Verwendung der ermittelten Parameter umgeschaltet, wobei in einer vorteilhaften Variante die Rücksetzung schrittweise erfolgt, so dass sich bei der Umschaltung eine gute Stabilität der Regelgröße ergibt.

Der Regler kann vollständig parametriert werden, indem nach der Ermittlung der Parameter für die Regelung des ersten der Stellwertausgänge in analoger Weise eine Ermittlung der der Parameter für die Regelung des zweiten Stellwertausgangs durchgeführt wird, wobei für die Dauer der Ermittlung für den ersten Stellwertausgang ein konstanter, von Null verschiedener Offset als Stellwert vorgegeben wird.

Die Parametrierung erfolgt schneller, wenn vor der Ermittlung der Parameter mittels Schwingungsversuchs vorläufige Werte für die Parameter ermittelt und angewendet werden, wobei mittels Ausgabe eines Stellwertsprunges für denjenigen Stellwertausgang, dessen Parameter zu ermitteln oder zu optimieren sind, und Erfassung und Auswertung der Sprungantwort des Wertes der Regelgröße die Parameter ermittelt werden. In vielen Fällen ermöglicht dieses Vorgehen es erst, dass der Arbeitspunkt der Optimierung stabil erreicht werden kann.

Ausführungsbeispiele des erfindungsgemäßen Verfahrens und damit auch der erfindungsgemäßen Computerprogramms werden nachfolgend anhand der Zeichnungen erläutert.

Dabei zeigen:
- Figur 1: das Blockschaltbild eines zu parametrierenden Reglers mit zwei Stellwertausgängen, und
- Figur 2: die Stellwerte, den Istwert der Regelgröße und den Sollwert während der Parametrierung des Reglers.

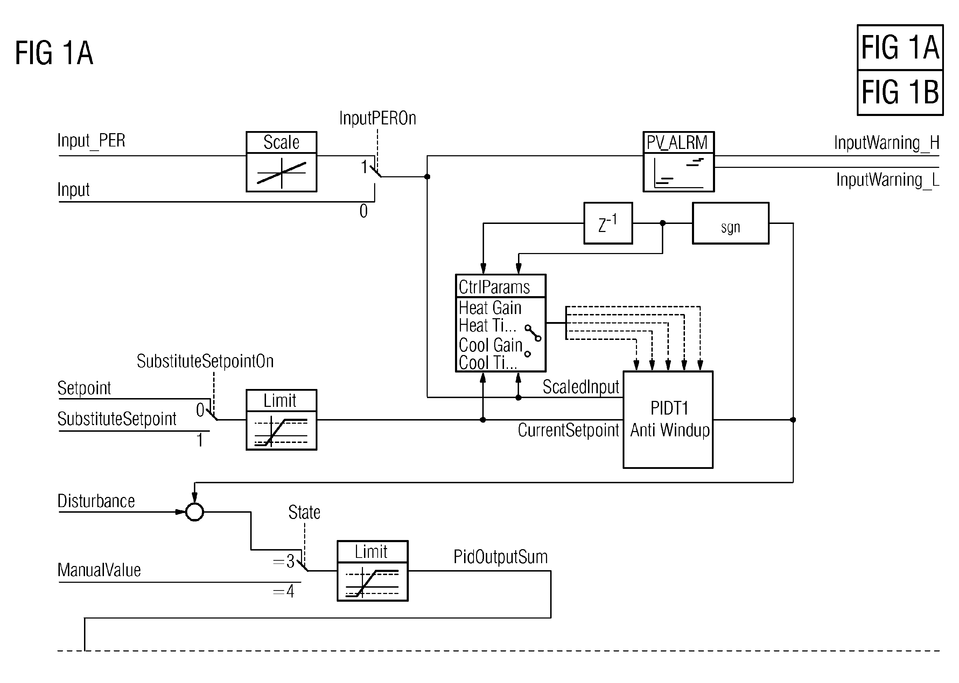

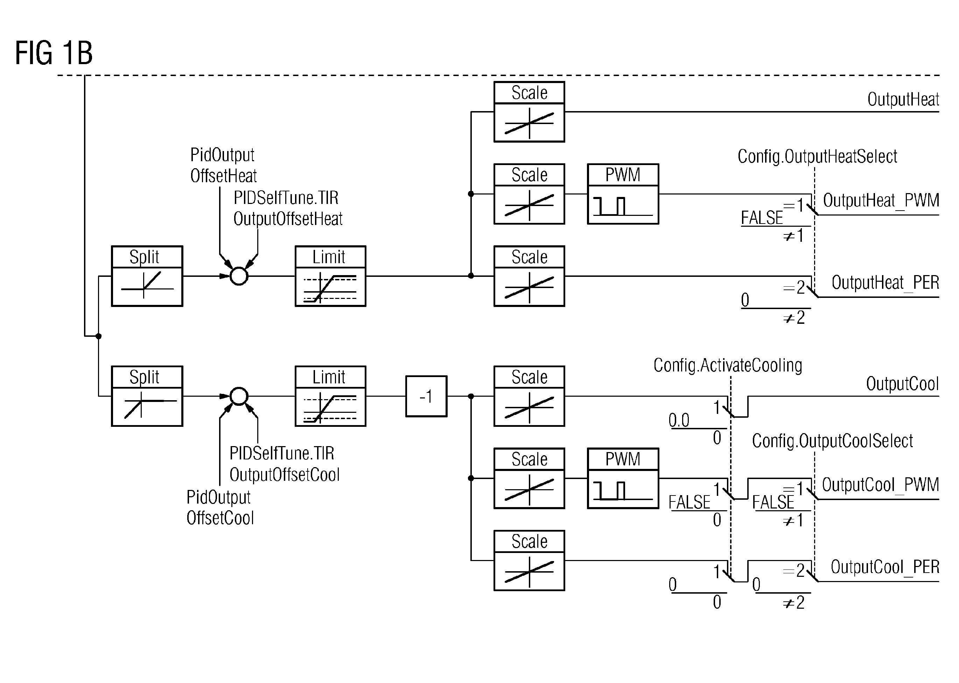

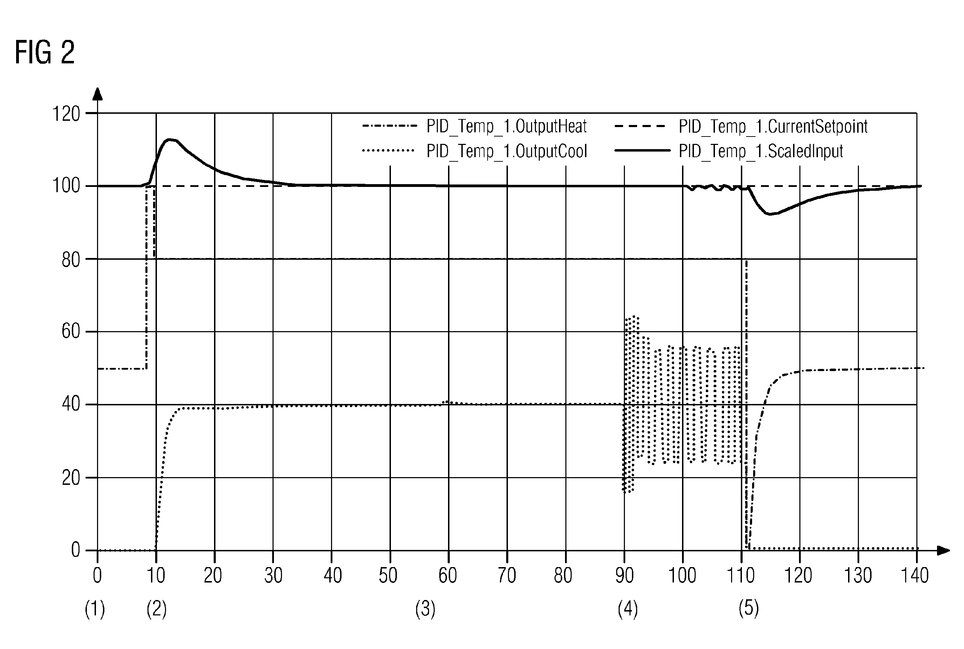

In der Figur 1 ist als Beispiel eines zu parametrierenden Reglers das Blockschaltbild eines Temperaturreglers (PID-Regler "PID_Temp_1") dargestellt, der sowohl eine Heizung als auch eine Kühlung (Kältemaschine) ansteuert; dazu sind 2 getrennte Stellwertausgänge bzw. Stellwertausgang-Gruppen OutputHeat, OutputCool vorgesehen; in der Figur 2 ist den Variablen jeweils der Name des Software-Reglerbausteins "PID_Temp_1." vorangestellt.

Dabei bedeuten:
- SubstituteSetpoint: alternativer Sollwerteingang
- Setpoint: Sollwerteingang
- Input, Input_PER: Istwerteingang
- ManualValue: Handwerteingang für Handbetrieb
- OutputHeat, OutputCool: Stellwertausgang im Gleitpunktformat
- OutputHeat_PER, OutputCool_PER: Stellwertausgang im Peripherie / Analogformat
- OutputHeat_PWM, OutputCool_PWM: Stellwertausgang als Signal in Pulsweitenmodulation
- Scale, Limit, Split: Berechnungsglieder zur Skalierung, Begrenzung oder vorzeichengesteuerter Aufteilung
- PWM: Block zur Erzeugung eines pulsweitenmodulierten Signals
- PIDT1 Anti Windup: Programmbaustein zur Verhinderung extremer Zustände im I-Anteil des Reglers

Der aktuelle Istwert (Regelgröße) wird über die Parameter In-put_PER oder Input an den Regler übergeben. Die Vorgabe des Sollwerts (Führungsgröße) erfolgt an den Parametern Setpoint oder SubstituteSetpoint. Sollwert und Istwert werden im PID-Algorithmus (in der Figur 1 gekennzeichnet mit "PIDT1 Anti Windup") verarbeitet, und der Ausgangswert PidOutputSum (Stellgröße) wird unter Berücksichtigung der Reglerparameter (Block "CtrlParams") berechnet. Dieser Ausgangswert PidOutputSum des PID-Algorithmus wird anschließend für den Stellwertausgang für Heizen OutputHeat und den Stellwertausgang für Kühlen OutputCool in getrennten Zweigen verarbeitet; dazu wird der Ausgangswert PidOutputSum (Stellgröße) unterteilt (Blöcke "Split").

Auf den Wert im Heizzweig kann der Optimierungsoffset über die Variable PIDSelfTune.TIR.OutputOffsetHeat addiert werden. Auf den Wert im Kühlzweig kann der Optimierungsoffset über die Variable PIDSelfTune.TIR.OutputOffsetCool addiert werden. Das Ergebnis wird mit den konfigurierten Stellwertgrenzen begrenzt und anschließend für die Ausgabe an den unterschiedlichen Ausgangsparametern (Stellwertausgänge bzw. Stellwertausgang-Gruppen OutputHeat, OutputCool) skaliert und ggf. weiterverarbeitet (z.B. PWM-Erzeugung).

Die Figur 2 zeigt ein Beispiel wesentlicher Signalverläufe bei der Parametrierung bzw. der Optimierung der ReglerParameter mit erfindungsgemäßem Optimierungsoffset des anhand der Figur 1 erläuterten Reglers.

Dabei sind die folgenden Größen dargestellt:
- PID_Temp_1.CurrentSetpoint: Sollwert = 100.0
- PID_Temp_1.ScaledInput: Istwert
- PID_Temp_1.OutputHeat: Stellwert Heizen
- PID_Temp-1.OutputCool: Stellwert Kühlen

Die Zeitachse zeigt fünf ausgezeichnete Zeitpunkte (1), ..., (5), auf die im Folgenden Bezug genommen wird.

Zum Zeitpunkt (1) sind folgende Bedingungen vor der Vorgabe des Optimierungsoffsets erfüllt (Regelung eingeschwungen d.h. im stationären Zustand):
- Sollwert = Istwert: 100 °C
- Umgebungstemperatur: 20 °C
- Stellwert Heizen: 50 %
- Stellwert Kühlen: 0 %

Dabei betreffen die Prozentangaben die maximal verfügbare Heizleistung bzw. die maximal verfügbare Kühlleistung.

Durch Vorgabe eines Optimierungsoffsets am Stellwertausgang für Heizen, der größer ist als 50 %, muss nun der Stellwertausgang für Kühlen aktiv werden, damit der Istwert am Sollwert verbleibt.

Zum Zeitpunkt (2) kann sich hier durch Vorgabe eines Optimierungsoffsets am Stellwertausgang für Heizen von 80 % der maximal verfügbaren Heizleistung folgender neuer stationärer Zustand zum Zeitpunkt (3) einstellen:
- Sollwert = Istwert: 100 °C
- Umgebungstemperatur: 20 °C
- Stellwert Heizen: 80 %
- Stellwert Kühlen: 40 %

Ab dem Zeitpunkt (4) kann der Stellwert am Stellwertausgang für Kühlen nun vom Optimierungsverfahren um den stationären Wert 40% variiert werden und so eine begrenzte Schwingung des Istwerts um den Sollwert verursachen; somit erfolgt eine Parametrierung anhand der "Relay-Feedback-Methode".

Ist die Optimierung dann beendet, wird der Optimierungsoffset automatisch zurückgesetzt, da er für den normalen Regelbetrieb nicht notwendig ist sondern nur für die Optimierung. Dies ist in der Figur 2 nach dem Zeitpunkt (5) dargestellt; es stellt sich der stationäre Zustand wie zum Zeitpunkt (1) ein.

Für die Vorgabe des Offsets stellt Der PID-Reglerbaustein eigene statische Variablen bereit. Die Offsetvorgabe wird in der Implementierung des PID-Reglerbausteins vorteilhaft so realisiert, dass die Optimierungsoffset-Werte über diese Variablen direkt auf den Stellwert-Zweig für die Stellwertausgänge gegeben werden.

Dies kann in vorteilhafter Ausgestaltung noch verbessert werden, indem ein Filterglied nach dem Optimierungsoffset-Eingang eingefügt wird. Ausprägungen eines solchen Filterglieds können z.B. Anstiegsbegrenzung, Rampenfunktion oder PTn-Glied (Verzögerungsglied n-ter Ordnung) sein.

Der gezeigte PID-Reglerbaustein unterstützt für die automatische Einstellung der Reglerparameter sowohl das Sprungantwort-Verfahren, als auch die Relay-Feedback-Methode. Da mit dem Sprungantwort-Verfahren bereits das Anfahren des Arbeitspunktes zur Optimierung genutzt werden kann, wird für die Inbetriebnahme des PID-Reglerbausteins vorteilhaft zuerst die Optimierung nach diesem Verfahren durchgeführt, um den Arbeitspunkt zu erreichen, und dann am Arbeitspunkt die Optimierung nach der Relay-Feedback-Methode durchgeführt. Mit diesem zweistufigen Vorgehen werden bessere Ergebnisse erzielt, als mit einem Verfahren alleine.

Sind bereits Informationen aus einer zuvor durchgeführten Optimierung nach dem Sprungantwort-Verfahren vorhanden, können diese vorteilhaft verwendet werden, um das oben beschriebene Filterglied für den Optimierungsoffset geeignet zu parametrieren. Alternativ, oder falls keine Informationen aus vorheriger Optimierung vorhanden sind, können dazu auch Anwendervorgaben hergenommen werden.

Auch das automatische Zurücksetzen des Optimierungsoffsets kann optional verbessert werden, indem der Optimierungsoffset nicht in einem Schritt auf den Wert 0.0 gesetzt wird, sondern, wie in der vorteilhaften Variante beim Aktivieren des Offsets über ein Filterglied eine schrittweise Veränderung erreicht wird.

Wird die Optimierung nach der Relay-Feedback-Methode vor ihrer Fertigstellung durch einen Fehler oder den Anwender abgebrochen, stehen für die Auslegung dieses Filters bei empfohlener Vorgehensweise die Informationen aus der zuvor nach dem Sprungantwort-Verfahren durchgeführten Optimierung bzw. "Vor-Parametrierung" bereit. Ist jedoch die Optimierung mittels der Relay-Feedback-Methode erfolgreich durchlaufen worden, können für die Auslegung des Filters zum Zurücksetzen des Optimierungsoffsets auch die zusätzlichen Informationen aus diesem Optimierungsdurchlauf genutzt werden.

Wird eine Optimierung nach der Relay-Feedback-Methode mit dem beschriebenen PID-Reglerbaustein gestartet, wird, sofern noch nicht geschehen, zuerst der Arbeitspunkt / Sollwert angefahren, und anschließend wird mit periodischen Stellwertänderungen eine begrenzte Istwert-Schwingung, also eine Oszillation, erzeugt.

Wird bei mehreren Reglern, deren Regelgrößen miteinander verkoppelt sind, gleichzeitig eine Optimierung mittels der Relay-Feedback-Methode gestartet, ist es sinnvoll, vor Erzeugen der Istwert-Schwingung (Oszillation) zu warten, bis alle Regler ihren Arbeitspunkt / Sollwert erreicht haben. Sonst kann dieses Anfahren des Arbeitspunkts eines langsameren Reglers die Durchführung der Optimierung eines schnelleren Reglers negativ beeinflussen.

Der Anwender kann dazu den PID-Reglerbaustein so konfigurieren, dass nach dem Start einer Optimierung nach der Relay-Feedback-Methode gewartet wird, bis der Arbeitspunkt / Sollwert erreicht ist. Dieses Warten kann dazu genutzt werden, dass alle Regler ihren Arbeitspunkt erreichen. Ist dies erfolgt, kann der Anwender über ein Steuer-Bit oder dgl. den PID-Reglerbaustein dazu veranlassen, die Optimierung fortzusetzen und mit der Erzeugung der Istwert-Schwingung zu beginnen. Diese Funktionalität kann auch bei der Durchführung einer Optimierung mit Optimierungsoffset für mehrere Regler genutzt werden, bessere Ergebnisse zu erzielen, wenn die Regelgrößen mehrerer Regler verkoppelt sind.

## Patentansprüche

1. Verfahren zur Ermittlung von Parameterwerten (CtrlParams) für einen PID-Regler mit zumindest zwei auf dieselbe Regelgröße wirkenden Stellwertausgängen (PID_Temp_1.OutputHeat, PID_Temp_1.OutputCool), wobei in einem Arbeitspunkt des Reglers zur Ermittlung der Parameterwerte (CtrlParams) für die Regelung eines ersten der Stellwertausgänge (PID_Temp_1.OutputCool) mittels Schwingungsversuch dieser erste Stellwertausgang (PID_Temp_1.OutputCool) zu einer Oszillation angeregt wird, und
wobei aus den Eigenschaften der Oszillation und der Reaktion des Istwertes (Input, Input_PER) die Parameter (CtrlParams) für die Regelung des ersten Stellwertausganges (PID_Temp_1.OutputCool) ermittelt werden, **dadurch gekennzeichnet,**
**dass** für die Dauer der Ermittlung für einen der Stellwertausgänge (PID_Temp_1.OutputHeat, PID_Temp_1.OutputCool) ein konstanter, von Null verschiedener Offset (PIDSelfTune.TIR.OutputOffsetHeat, PIDSelfTune.TIR.OutputOffsetCool) zum Stellwert addiert wird.

2. Verfahren nach Patentanspruch 1,
**dadurch gekennzeichnet,**
**dass** für die Dauer der Ermittlung für den zweiten Stellwertausgang (PID_Temp_1.OutputHeat) ein konstanter, von Null verschiedener Offset (PIDSelfTune.TIR.OutputOffsetHeat) als Stellwert vorgegeben wird.

3. Verfahren nach einem der vorhergehenden Patentansprüche,
**dadurch gekennzeichnet,**
**dass** die beiden Stellwertausgänge (PID_Temp_1.OutputHeat, PID_Temp_1.OutputCool) gegensätzlich auf dieselbe Regelgröße (PID_Temp_1.ScaledInput) einwirken.

4. Verfahren nach einem der vorhergehenden Patentansprüche,
**dadurch gekennzeichnet,**
**dass** der vorgegebene Offset (PIDSelfTune.TIR.OutputOffsetHeat) größer gewählt wird, als der sich in einem Regelbetrieb am gewählten Arbeitspunkt ergebende Stellwert des zweiten Stellwertausgangs (PID_Temp_1.OutputHeat).

5. Verfahren nach einem der vorhergehenden Patentansprüche,
**dadurch gekennzeichnet,**
**dass** nach der Vorgabe des Offsets (PIDSelfTune.TIR.OutputOffsetHeat) am zweiten Stellwertausgang (PID_Temp_1.OutputHeat) der Stellwert am ersten Stellwertausgang (PID_Temp_1.OutputCool) durch den Regler im Regelbetrieb angepasst wird.

6. Verfahren nach einem der vorhergehenden Patentansprüche,
**dadurch gekennzeichnet,**
**dass** die Oszillation durch periodische Änderungen des Stellwertes des ersten Stellwertausganges (PID_Temp_1.OutputCool) angeregt wird.

7. Verfahren nach einem der vorhergehenden Patentansprüche,
**dadurch gekennzeichnet,**
**dass** nach der Ermittlung der Regelparameter (CtrlParams) der konstante, von Null verschiedene Offset zurückgesetzt wird und der Regler in den Regelbetrieb mit Verwendung der ermittelten Parameter (CtrlParams) umgeschaltet wird.

8. Verfahren nach Patentanspruch 7,
**dadurch gekennzeichnet,**
**dass** die Rücksetzung schrittweise erfolgt.

9. Verfahren nach einem der vorhergehenden Patentansprüche,
**dadurch gekennzeichnet,**
**dass** nach der Ermittlung der Parameter (CtrlParams) für die Regelung des ersten der Stellwertausgänge (PID_Temp_1.OutputCool) in analoger Weise eine Ermittlung der Parameter (CtrlParams) für die Regelung des zweiten Stellwertausgangs (PID_Temp_1.OutputHeat) durchgeführt wird, wobei für die Dauer der Ermittlung für den ersten Stellwertausgang (PID_Temp_1.OutputCool) ein konstanter, von Null verschiedener Offset als Stellwert vorgegeben wird.

10. Verfahren nach einem der vorhergehenden Patentansprüche,
**dadurch gekennzeichnet,**
**dass** vor der Ermittlung der Parameter (CtrlParams) mittels Schwingungsversuchs vorläufige Werte für die Parameter (CtrlParams) ermittelt und angewendet werden, wobei in einem Sprungversuch mittels Ausgabe eines Stellwertsprunges für denjenigen Stellwertausgang, dessen Parameter (CtrlParams) zu ermitteln sind, und Erfassung und Auswertung der Sprungantwort des Wertes der Regelgröße (PID_Temp_1.ScaledInput) die Parameter (CtrlParams) ermittelt oder optimiert werden.

11. Computerprogramm zur Regelung von zumindest zwei auf dieselbe Regelgröße wirkenden Stellwertausgängen (PID_Temp_1.OutputHeat, PID_Temp_1.OutputCool) mittels eines PID-Algorithmus,
wobei das Computerprogramm bei seiner Ausführung mittels eines mikroprozessorgesteuerten Systems, insbesondere einer industriellen Automatisierungskomponente, zur Ermittlung von Werten der Parameter (CtrlParams) für den PID-Regler gemäß einem der vorstehend beschriebenen Verfahren eingerichtet ist.
